Europäisches Patentamt

European Patent Office

Office européen des brevets

(19)

(11) Publication number: **0 178 681**

A1

(12)

# EUROPEAN PATENT APPLICATION

(21) Application number: **85113252.2**

(22) Date of filing: **18.10.85**

(51) Int. Cl.⁴: **B 23 K 9/30**

(30) Priority: **18.10.84 JP 219248/84**

(43) Date of publication of application:
**23.04.86 Bulletin 86/17**

(84) Designated Contracting States:
**DE FR GB**

(71) Applicant: **MITSUBISHI JUKOGYO KABUSHIKI KAISHA**
**5-1, Marunouchi 2-chome Chiyoda-ku**
**Tokyo(JP)**

(71) Applicant: **MITSUBISHI DENKI KABUSHIKI KAISHA**
**2-3, Marunouchi 2-chome Chiyoda-ku**
**Tokyo 100(JP)**

(72) Inventor: **Yahata, Haruo Kobe Shipyard & Engine Works**
**Mitsubishi Jukogyo K. K. 1-1, Wadasaki-cho 1-chome**
**Hyogo-ku Kobe City Hyogo Pref.(JP)**

(72) Inventor: **Sugiyama, Hisao c/o Mitsubishi Denki K.K.**
**Nagoya Works No. 1-14, Yadaminami 5-chome**
**Higashi-ku Nagoya-shi Aichi(JP)**

(74) Representative: **Lehn, Werner, Dipl.-Ing. et al,**
**Hoffmann, Eitle & Partner Patentanwälte Arabellastrasse**
**4 (Sternhaus)**
**D-8000 München 81(DE)**

(54) Oscillating device in automatic welding machine.

(57) An oscillating device for moving the torch of an automatic welding machine, whereby welds in grooves are formed more uniformly and desired parts welded can be welded with a large oscillation angle. The oscillating device includes both a pendulum oscillation mechanism (4) and a parallel oscillation mechanism (3). The pendulum oscillation mechanism (4) oscillates the arc generating point of the welding torch (1) in a pendulum-like motion in a cross section of a groove defined by the materials to be welded. The parallel oscillation mechanism (3) moves the arc generating point in a direction perpendicular to the welding torch advancement direction. The two mechanisms are operated in association with each other to achieve welding operations.

EP 0 178 681 A1

./...

FIG. 5

## OSCILLATING DEVICE IN AUTOMATIC WELDING MACHINE

The present invention relates to an automatic welding machine, and to an oscillating device for use in such an automatic welding machine. The device may be capable to control the locus of the arc generating point of the welding torch, i.e., the oscillation locus of the arc generating point, thereby to stably weld the materials to be welded.

In the field of welding, for improvement of work efficiency and reduction of the welding time, an automatic welding machine has been proposed in which the welding torch is oscillated laterally of the welding line or the arc generating point of the welding torch is swung like a pendulum in a cross section of a groove defined by the materials to be welded.

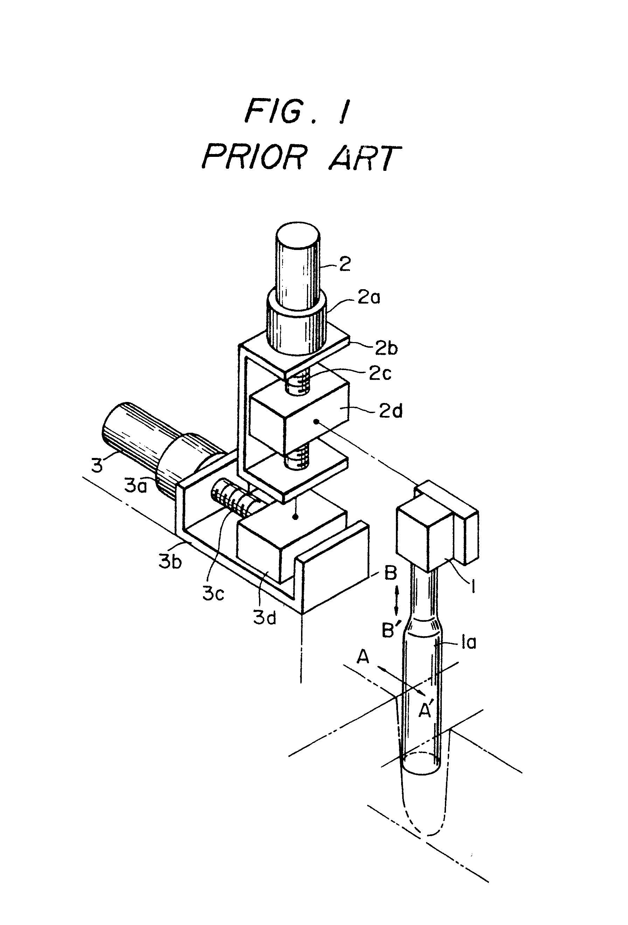

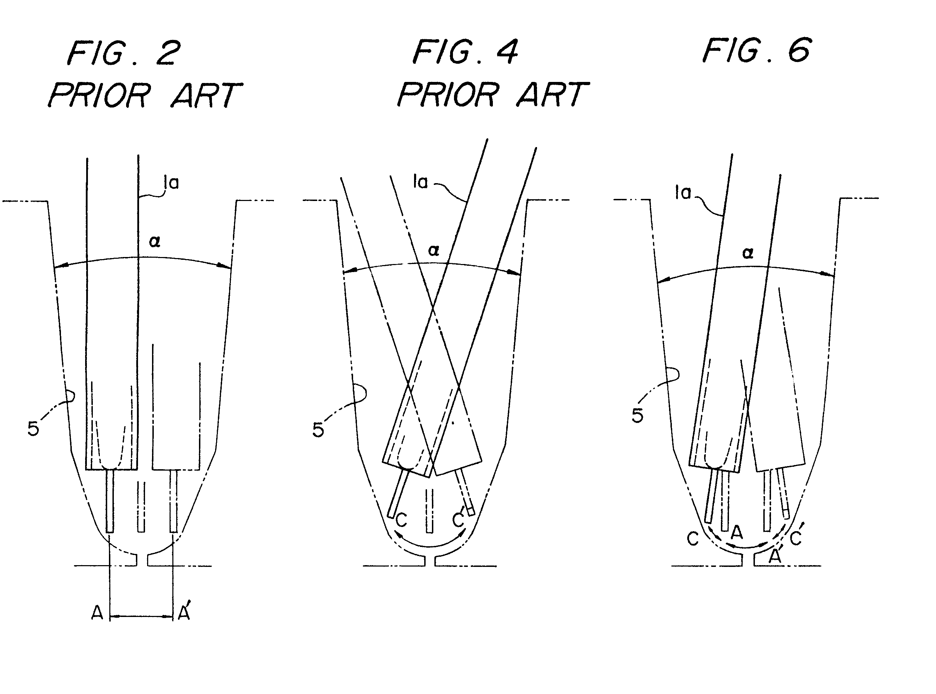

Figs. 1 and 2 of the accompanying drawings show a conventional oscillating device in an automatic welding machine in which welding is carried out with the welding torch oscillated laterally of the welding line. In these Figures, reference numeral 1 designates a welding torch; 1a, the nozzle of the torch; 2, an adjusting mechanism on which the welding torch 1 is mounted, the adjusting mechanism being used to move the welding torch 1 in a welding bead build-up direction B-B';

- 2 -

2a, a motor; 2b, a frame, 2c, a threaded shaft; and 2d, a moving stand. The threaded shaft 2c is secured to the output shaft of the motor 2a. Therefore, the threaded shaft 2c is turned by rotating the motor 2a so that the moving stand 2d threadably mounted on the threaded shaft 2c is moved thereby to move the welding torch 1, which is mounted on the moving stand 2d. Accordingly, in order to operate the welding torch 1 with the adjusting mechanism 2, first an operating signal is applied to the motor 2a to turn the threaded shaft 2c, thereby to move the moving stand 2d, which is threadably mounted on the threaded shaft 2c.

Further in Fig. 1, reference numeral 3 designates a parallel oscillation mechanism on which the adjusting mechanism 2 is mounted, the mechanism 3 being used to move the welding torch 1 in a direction perpendicular to a welding advancement direction A-A'; 3a, a motor; 3b, a frame; 3c, a threaded shaft; and 3d, a moving stand.

As the motor 3a is rotated in the forward and reverse directions, the threaded shaft 3c secured to the output shaft of the motor 3a is turned in the forward and reverse directions to reciprocate the moving stand 3d, which is threadably mounted on the threaded shaft 3c, thereby to oscillate the welding torch 1 in a parallel motion. Accordingly, in order to oscillate the welding torch 1 with the parallel oscillating mechanism 3, a instruction signal is applied to the motor 3a to turn the threaded shaft 3c thereby to move the moving stand 3d.

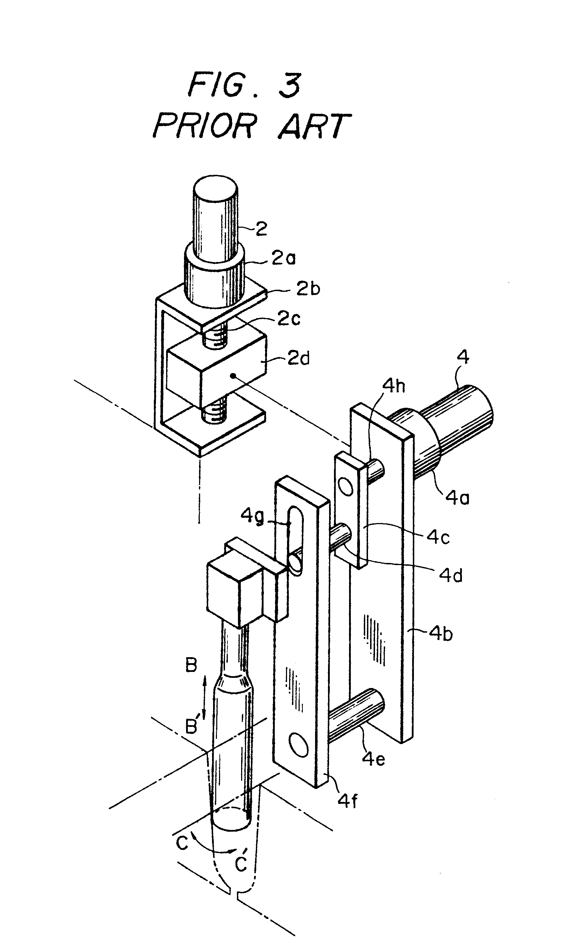

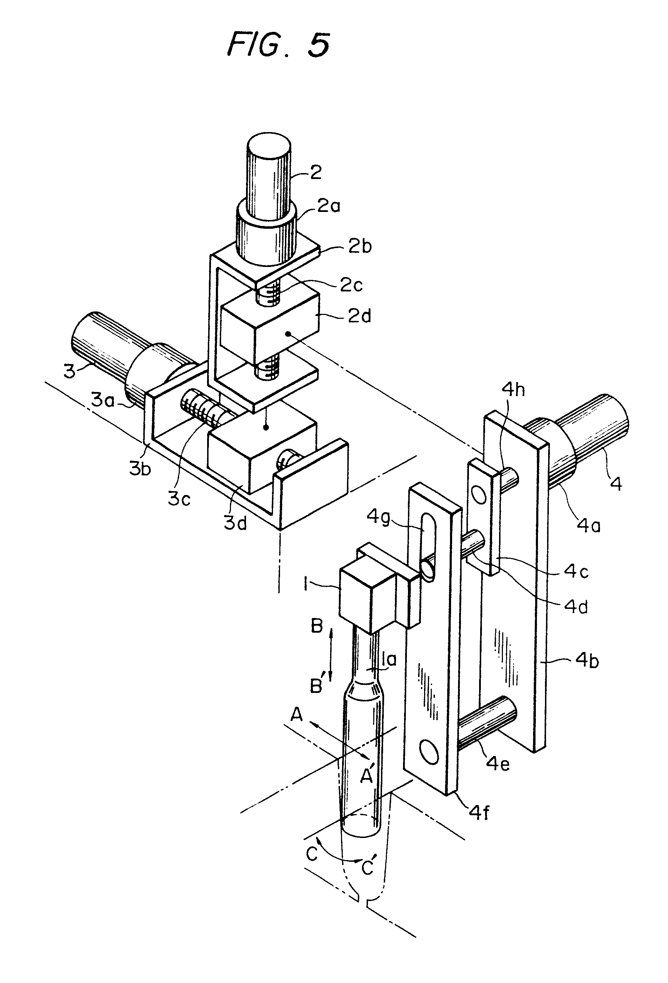

Fig. 3 and 4 show another conventional oscillating device in an automatic welding machine in which the arc generating point of the welding torch is made to undergo an oscillation locus motion similar to the motion of a pendulum, the motion being carried out in the cross section of a groove formed in a material to be welded. In these Figures, those components which have been previously described with reference to Figs. 1 and 2 are therefore designated by the same reference numerals or characters. In Figs. 3 and 4, reference numeral 4 designates a pendulum oscillation mechanism mounted on the adjusting mechanism 2 and adapted to hold the welding torch 1, the mechanism 4 being used to move the arc generating point of the welding torch 1 in a direction C-C' (the locus of the arc generating point in the cross section of a groove defined by the material to be welded); 4a, a motor; 4b, a motor mounting plate; 4c, a swing arm; 4d, a pin; 4e, a rotating shaft; 4f, an arm having a groove 4g; and 4h, a motor output shaft. The swing arm 4c secured to the output shaft 4h of the motor 4a is turned in the forward and reverse directions by rotating the motor 4a in the forward and reverse directions. Accordingly, the arm 4f, with the groove 4g, in which the pin 4d of the arm 4c is engaged, is swung about the rotating shaft 4e so that the welding torch 1, fixedly mounted on the arm 4f, is caused to undergo a pendulum oscillation. Accordingly, in order to oscillate the welding torch 1 with the pendulum oscillation mechanism 4, an operating signal is applied to the motor 4a to turn the swing arm 4c in the forward and reverse directions, thereby to swing the arm 4f about the rotating shaft 4e. As the welding torch 1 is arranged so that its arc generating point is below the rotating shaft 4e, the arc generating point is oscillated like a pendulum.

The conventional oscillating device shown in Fig. 1 is disadvantageous in the following points: In the case where, as shown in Fig. 2, a groove angle α is small, the end of the nozzle 1a tends to touch the groove side wall 5, making it impossible to weld a certain part of the groove side wall 5. Accordingly, the degree of penetration is low in the side wall 5, and the weld bead build-up is unsatisfactory. These difficulties result in defective welds.

The conventional oscillating device shown in Fig. 3 is also disadvantageous in that, since the length of the electrode protruding from the nozzle changes with time, as shown in Fig. 4, the produced arc is liable to be unstable, which may form spatters or result in defective welds.

An object of the present invention is to eliminate the above-described difficulties accompanying a conventional oscillating device in an automatic welding machine. More specifically, an object of the invention is to provide an oscillating device for an automatic welding machine in which the nozzle cannot touch the groove side walls, desired parts of the groove side wall can always be welded, the weld penetration of the groove side walls is sufficient, the length of the wire electrode protruding from the nozzle is less variable, and the arcs are stable, whereby the resultant weld is uniform and high in quality.

An automatic welding machine's oscillating device provided by the invention comprises a pendulum oscillation mechanism for oscillating the arc generating point in a direction perpendicular to a welding torch advancement direction, the two mechanisms being operated in association with each other.

In accordance with the invention, the pendulum oscillation mechanism and the parallel oscillation mechanism are operated in association with each other to achieve the welding work. Therefore, the oscillation of the welding torch is the resultant oscillation of the oscillations by the two mechanisms.

For a better understanding of the invention, and to show how the same may be carried into effect, reference will now be made, by way of example, to the accompanying drawings, in which:

Fig. 1    is a perspective view showing a conventional oscillating device in an automatic welding machine which has a parallel oscillation mechanism;

Fig. 2    is an explanatory diagram showing relationships between a welding torch and a groove in the case where the device shown in Fig. 1 is employed;

Fig. 3    is a perspective view showing another conventional oscillating device in an automatic welding machine which has a pendulum oscillation mechanism;

Fig. 4    is an explanatory diagram showing relationships between a welding torch and a groove in the case where the device shown in Fig. 3 is employed;

Fig. 5    is a perspective view showing an oscillating device in an automatic welding machine according to one embodiment of the invention; and

Fig. 6 is an explanatory diagram showing relationships between a welding torch and a groove in the case where the device of Fig. 5 is employed.

Figs. 5 and 6 show an embodiment of this invention. In Figs. 5 and 6, those components which are equivalent to or correspond functionally to those which have been described above with reference to Figs. 1 through 4 are designated by the same reference numerals or characters.

The oscillating device of the invention includes the adjusting mechanism 2 for moving the welding torch 1 in a direction B-B'; the parallel oscillation mechanism 3 for moving the welding torch 1 in a direction A-A'; and the pendulum oscillation mechanism 4 for swinging the arc generating point of the welding torch 1 in a direction C-C'. The oscillation mechanisms 3 and 4 are operated in association with each other. Therefore, the oscillation of the welding torch 1 is the resultant oscillation of the oscillation by the parallel oscillation mechanism 3 and the oscillation by the pendulum oscillation mechanism 4.

As, in the oscillating device thus constructed, the motors 3a and 4a are rotated as required with predetermined timing in response to signals from an external instruction device (not shown), the arc generating point of the welding torch 1 is repeatedly moved along the locus of:

A → (parallel oscillation) → A' → (pendulum oscillation) → C' → (pendulum oscillation) → A' → (parallel oscillation) → A → (pendulum oscillation) → C → (pendulum oscillation) → A.

Accordingly, in welding a groove, the oscillating device of the invention is less variable in the length of the wire electrode protruding from the nozzle when compared with the conventional oscillating device. Furthermore, desired parts of the groove side wall 5 can be welded with a larger oscillation angle.

As is apparent from the above description, in the oscillating device of the invention, the pendulum oscillation mechanism and the parallel oscillation mechanism are operated in association with each other to move the welding torch. Therefore, when the oscillating device of the invention is used for a material to be welded which is thick and has a narrow groove, desired parts of the groove wall can be welded with a large oscillation angle. Furthermore, with the oscillating device of the invention, the generated arc is excellent in stability, and the weld penetration of the groove wall is sufficient. Thus, the resultant weld is uniform and high in quality.

- 10 -

0178681

Claims:

1. An oscillating device for use in an automatic welding machine, characterized by:

a pendulum oscillation mechanism (4) for oscillating an arc generating point of a welding torch (1) in a pendulum-like motion in a cross section of a groove (5) defined by materials to be welded; and

a parallel oscillation mechanism (3) for moving said arc generating point in a direction perpendicular to a welding torch advancement direction,

said pendulum oscillation and parallel oscillation mechanisms (3,4) being operable in association with each other to achieve a welding operation.

2. An oscillating device as claimed in claim 1, further comprising an adjusting mechanism (2) for moving said welding torch (1) in an up-and-down direction with respect to said groove (5).

3. An automatic welding machine comprising an oscillating device according to claim 1 or 2.

0178681

FIG. 1
PRIOR ART

FIG. 2
PRIOR ART

FIG. 4
PRIOR ART

FIG. 6

FIG. 3
PRIOR ART

## FIG. 5

## DOCUMENTS CONSIDERED TO BE RELEVANT

EP 85113252.2

| Category | Citation of document with indication, where appropriate, of relevant passages | Relevant to claim | CLASSIFICATION OF THE APPLICATION (Int Cl 4) |
|---|---|---|---|
| A | US - A - 4 455 471 (ECER)<br>* Fig. 3B * | 1 | B 23 K 9/30 |
| A | DE - C - 601 076 (NAAMLOOZE)<br>* Fig. 1-3 * | 1-3 | |
| A | DE - A1 - 2 546 894 (PUSCHNER)<br>* Fig. 7 * | | |

TECHNICAL FIELDS SEARCHED (Int. Cl.4)

B 23 K 9/00
B 23 K 33/00
B 23 K 37/00

The present search report has been drawn up for all claims

| Place of search | Date of completion of the search | Examiner |
|---|---|---|
| VIENNA | 20-01-1986 | BENCZE |